# EUROPEAN PATENT SPECIFICATION

(11) **EP 3 623 395 B1**
(45) Date of publication and mention of the grant of the patent: **07.02.2024**
(21) Application number: 18813658.4
(22) Date of filing: 06.06.2018
(51) Int. Cl.: C08F 16/06

(54) **METHOD OF PRODUCING MODIFIED VINYL ALCOHOL POLYMER**
VERFAHREN ZUR HERSTELLUNG VON MODIFIZIERTEM VINYLALKOHOLPOLYMER
PROCÉDÉ DE PRODUCTION D'UN POLYMÈRE D'ALCOOL VINYLIQUE MODIFIÉ

(30) Priority: 09.06.2017 JP 2017114532
(43) Date of publication of application: 18.03.2020
(73) Proprietor: Denka Company Limited, Tokyo 103-8338 (JP)
(72) Inventor: WATANABE,Wataru, Itoigawa-city Niigata 949-0393 (JP)
(74) Representative: Yeadon IP Limited
(86) International application number: PCT/JP2018/021758
(87) International publication number: WO 2018/225796

(56) References cited:
- EP-A1- 3 103 821
- WO-A1-2015/119144
- JP-A- H05 105 702
- JP-A- H06 179 777
- JP-A- H08 208 724
- JP-A- S51 115 587

## Description

### TECHNICAL FIELD

The present invention relates to a method of producing a modified vinyl alcohol-based polymer.

### BACKGROUND ART

When industrially producing vinyl-based resins such as vinyl chloride-based resins, suspension polymerization is widely carried out by dispersing vinyl-based compounds such as vinyl chloride in an aqueous medium in the presence of a dispersion stabilizing agent, and performing polymerization using an oil-soluble catalyst. In general, factors governing the quality of vinyl-based resins include a polymerization rate, a water-monomer ratio, a polymerization temperature, a type and amount of catalyst, a type of polymerization vessel, a stirring speed, and a type of dispersion stabilizing agent. In particular, the influence of the type of dispersion stabilizing agent is significant.

The performance required for dispersion stabilizing agents for suspension polymerization of vinyl-based compounds includes a function of sharpening particle size distribution of the resulting vinyl-based resin particles as much as possible; a function of rendering each resin particle porous in order to increase an absorption rate of a plasticizer to improve processability, facilitate removal of monomers such as vinyl chloride remaining in the resin particles and prevent formation of fish eyes or the like in a formed product; and a function of forming resin particles having a large bulk specific gravity.

Conventionally, as a dispersion stabilizing agent for suspension polymerization of vinyl-based compounds, a cellulose derivative such as methyl cellulose and carboxymethyl cellulose or polyvinyl alcohol or the like is used alone or in combination with each other. Among these, polyvinyl alcohols (PVAs) have excellent properties and are most commonly used. However, it is known that the polyvinyl alcohols have various physical and chemical properties such as a degree of polymerization and a degree of saponification, and these properties have a subtle effect on the properties of the vinyl-based resin. Prior arts propose various modified vinyl alcohol-based polymers obtained by introducing an aldehyde-derived carbonyl group at the terminal of the vinyl alcohol-based polymer and undergoing dehydration reaction or de-acetic acid reaction during saponification to introduce an unsaturated double bond (for example, see Patent Documents 1 and 2); and by carrying out a heat treatment in a specific oxygen concentration atmosphere to introduce a carboxyl group (for example, see Patent Document 3).

Further, to provide a dispersant for suspension polymerization which can obtain a vinyl polymer having a decreased amount of coarse particles during polymerization, a sharp particle size distribution and a high plasticizer absorbability, a prior art proposes to control an weight average molecular weight, a number average molecular weight and an absorbance of PVA within predetermined ranges (see Patent Document 4). The document discloses that PVA having such properties can be produced by polymerizing a vinyl ester in the presence of an aldehyde or a halogen compound (a chain transfer agent) having two or more halogen atoms in its molecule to obtain a polyvinyl ester, and then saponifying the polyvinyl ester. It also discloses that, as a method for polymerizing the vinyl ester, solvent-free bulk polymerization and solution polymerization using an alcoholic solvent are preferably employed.

### CITATION LIST

### Patent Literatures :

Patent Document 1: Japanese Patent Application Publication No. S51-115587 A
Patent Document 2: Japanese Patent Application Publication No. H08-208724 A
Patent Document 3: Japanese Patent Application Publication No. H05-105702 A
Patent Document 4: WO 2015/119144 A1

In other prior art: JP-A-H06 179777 discloses a polyolefin resin composition having excellent hydrophilicity and transparency, which is produced by melting and kneading (A) a polyolefin resin with (B) a partially saponified ethylene-vinyl acetate copolymer having an ethylene content of 25-70mol%, a degree of saponification of 50-95mol% and a benzene-soluble content of 5-90wt.% at a weight ratio (A:B) of 99:1 to 50:50.

### SUMMARY OF INVENTION

### Technical Problem

However, these methods are not sufficient for various types of polymerization vessels such as large-sized polymerization vessels used in recent years. That is, these method cause problems that they result in bulky vinyl-based resin particles having low dispersibility and low plasticizer absorbability, or they result in excessively fine vinyl-based resin particles having high dispersibility to have an excessively low bulk specific gravity, or they result in fine vinyl-based resin particles but having low plasticizer absorbability. Therefore, these methods are not sufficient to obtain satisfactory vinyl-based resin particles stably. Further, there is a problem that polymerization reaction does not proceed rapidly even if the vinyl ester is bulk-polymerized or solution-polymerized in the presence of a chain transfer agent according to the teachings of Patent Document 4.

Thus, an object of the present invention is to provide a production method capable of producing a modified vinyl alcohol-based polymer with a high efficiency suitable as a dispersion stabilizing agent for obtaining fine resin particles which have a highly uniform particle size, high plasticizer absorbability and proper bulk specific gravity, when subjecting a vinyl-based compound such as vinyl chloride to suspension polymerization.

### Solution to Problem

As a result of intensive studies to solve the above problems, the present inventor has found that for solving the problems it is effective to subject a vinyl ester-based monomer to suspension polymerization in the presence of halogenated methane, and saponifying the resulting vinyl ester-based polymer to obtain a modified vinyl alcohol-based polymer, which is used as a dispersion stabilizing agent for suspension polymerization, and the inventor has arrived at the present invention. Patent Document 4 does not specifically disclose the production of the modified vinyl alcohol-based polymer by combining suspension polymerization with halogenated methane, and the advantages thereof. Further, it cannot be predicted from the teachings of Patent Document 4 that such a combination can produce an advantageous effect of significantly increasing a polymerization reaction rate of the vinyl ester-based monomer.

The present invention has been completed on the basis of the above findings, and is exemplified as follows:
In one aspect, the present invention relates to a method of producing a modified vinyl alcohol-based polymer having a formyl group at its terminal, comprising steps of:
1) subjecting a vinyl ester-based monomer to suspension polymerization in an aqueous medium in the presence of one or more halogenated methanes represented by general formulae (I) to (III) to obtain a vinyl ester-based polymer, wherein the vinyl ester-based monomer is polymerized alone or the vinyl ester-based monomer is copolymerized with 10 mol% or less of a monomer that is copolymerizable with the vinyl ester monomer, based on the total number of moles of the vinyl ester-based monomer:

   H₂CX₂ ··· (I)

   in which two Xs are each independently a halogen atom selected from a group consisting of a chlorine atom, a bromine atom and an iodine atom;

   HCX₃ ··· (II)

   in which three Xs are each independently a halogen atom selected from a group consisting of a chlorine atom, a bromine atom and an iodine atom; and

   CX₄ ··· (III)

   in which four Xs are each independently a halogen atom selected from a group consisting of a chlorine atom, a bromine atom and an iodine atom;
2) dissolving the vinyl ester-based polymer obtained in the step 1) in an alcoholic medium; and
3) adding an alkali to a solution of the vinyl ester-based polymer in the alcoholic medium, obtained in the step 2), to cause saponification reaction.

In one embodiment of the method of producing the modified vinyl alcohol-based polymer according to the present invention, at least one selected from the group consisting of tribromomethane, trichloromethane and iodoform is used as the halogenated methane.

In another embodiment of the method of producing the modified vinyl alcohol-based polymer according to the present invention, a degree of saponification in the step 3) is adjusted to 65 mol% to 90 mol%.

In still another embodiment of the method of producing the modified vinyl alcohol-based polymer according to the present invention, the modified vinyl alcohol polymer has a formyl group content of from 0.01 to 0.30 mol%.

In yet another embodiment of the method of producing the modified vinyl alcohol-based polymer according to the present invention, the modified vinyl alcohol-based polymer has a degree of polymerization of from 300 to 4,000.

In still another embodiment of the method of producing the modified vinyl alcohol-based polymer according to the present invention, a total amount of halogenated methane added in the step 1) is from 0.1 to 10 parts by mass per 100 parts by mass of the vinyl ester monomer.

### Advantageous Effects of Invention

According to the present invention, provided is a method of simply producing a modified vinyl alcohol-based polymer with good yield, which is suitable as a dispersion stabilizing agent for suspension polymerization capable of obtaining fine resin particles that have a high uniform particle size, a high plasticizer absorbability, and an appropriate bulk specific gravity. Therefore, the method of producing the modified vinyl alcohol-based polymer according to the present invention is industrially very useful.

### DESCRIPTION OF THE PREFERRED EMBODIMENTS

Hereinafter, the present invention will be described in detail.

In one embodiment, a method of producing a modified vinyl alcohol-based polymer according to the present invention includes steps of:
1) subjecting a vinyl ester-based monomer to suspension polymerization in an aqueous medium in the presence of one or more halogenated methanes represented by general formulae (I) to (III) to obtain a vinyl ester-based polymer, wherein the vinyl ester-based monomer is polymerized alone or the vinyl ester-based monomer is copolymerized with 10 mol% or less of a monomer that is copolymerizable with the vinyl ester monomer, based on the total number of moles of the vinyl ester-based monomer:

   H₂CX₂ ··· (I)

   in which two Xs are each independently a halogen atom selected from a group consisting of a chlorine atom, a bromine atom and an iodine atom;

   HCX₃ ··· (II)

   in which three Xs are each independently a halogen atom selected from a group consisting of a chlorine atom, a bromine atom and an iodine atom; and

   CX₄ ··· (III)

   in which four Xs are each independently a halogen atom selected from a group consisting of a chlorine atom, a bromine atom and an iodine atom;
2) dissolving the vinyl ester-based polymer obtained in the step 1) in an alcoholic medium; and
3) adding an alkali to a solution of the vinyl ester-based polymer in the alcoholic medium, obtained in the step 2), to cause saponification reaction.

### (1. Step 1))

In the present invention, the halogenated methane used in the step 1) for carrying out suspension polymerization of the vinyl ester-based monomer includes dichloromethane, dibromomethane and methylene iodide in which two halogens are bonded; trichloromethane, tribromomethane and iodoform in which three halogens are bonded; and carbon tetrachloride and carbon tetrabromide in which four halogen atoms are bonded, which can be used alone or in combination with one another. These halogenated methanes act as chain transfer agents during suspension polymerization to control a degree of polymerization of the vinyl ester-based polymer and is also bonded to the polymer terminal.

The polymer terminal derived by the halogenated methane is hydrolyzed during the saponification reaction to form a formyl group. Therefore, the modified vinyl alcohol-based polymer obtained by the production method according to the present invention can have a formyl group at the terminal. It is believed that the modified vinyl alcohol-based polymer provides excellent performance as a dispersion stabilizing agent for suspension polymerization by forming a double bond at the polymer terminal starting from the formyl group when the vinyl-based compound such as vinyl chloride is subjected to suspension polymerization.

From the viewpoint that the modified vinyl alcohol-based polymer (a dispersion stabilizing agent) suitable for obtaining fine resin particles with a highly uniform particle size, a high plasticizer absorbability and a proper bulk specific gravity can be obtained with a high production efficiency, it is preferable to use trihalomethane as represented by the general formula (II) in which three halogens are bonded, and it is more preferable to use tribromomethane.

An amount of halogenated methane added is adjusted in relation to a degree of polymerization of a target modified vinyl alcohol-based polymer. If the amount of halogenated methane added is higher, the degree of polymerization of the polymer decreases, and if it is lower, the degree of polymerization of the polymer increases. The degree of polymerization of the modified vinyl alcohol-based polymer is preferably in a range of from 300 to 4,000, and more preferably in a range of from 400 to 2,000, and still more preferably in a range of from 500 to 1,000. When the degree of polymerization of the modified vinyl alcohol-based polymer is too low, the performance as a dispersion stabilizing agent for suspension polymerization is reduced, leading to coarseness of the polymer particles and uneven particle size, thereby resulting in poor stability. On the other hand, when the degree of polymerization of the modified vinyl alcohol-based polymer is too high, the viscosity is increased, leading to difficult handling. The total addition amount of halogenated methane suitable for obtaining the degree of polymerization in such a range is preferably in a range of from 0.01 to 10 parts by mass, and more preferably in a range of 0.1 to 9.5 parts by mass, and even more preferably 0.2 to 9.0 parts by mass, per 100 parts by mass of the vinyl ester monomer, although it depends on types of halogenated methanes.

The degree of polymerization is measured as a viscosity average polymerization degree in accordance with JIS K 6726: 1994. That is, after completely saponifying and purifying the modified vinyl alcohol-based polymer, the degree of polymerization is determined from intrinsic viscosity [η] measured in water at 30 °C.

The vinyl ester monomer that can be used in the present invention includes, but not particularly limited to, in addition to vinyl acetate, vinyl formate, vinyl propionate, vinyl valerate, vinyl caprate, vinyl laurate, vinyl stearate, vinyl benzoate, vinyl pivalate, vinyl versatate, and the like. In terms of availability and handling, vinyl acetate is preferably used.

In some embodiments of the present invention, the vinyl ester monomer may be copolymerized with monomers that are copolymerizable with the vinyl ester monomer, for example, unsaturated monocarboxylic acids such as acrylic acid, methacrylic acid and crotonic acid or alkyl esters of these unsaturated monocarboxylic acids; unsaturated dicarboxylic acids such as maleic acid, fumaric acid and itaconic acid or alkyl esters of these unsaturated dicarboxylic acids; nitriles or amides such as acrylonitrile, methacrylonitrile, acrylamide and methacrylamide; olefin sulfonic acids such as ethylene sulfonic acid, allyl sulfonic acid, and methallyl sulfonic acid or salts thereof; saturated branched fatty acid vinyl; vinyl ethers; vinyl ketones; α-olefins; vinyl halides; vinylidene halides; and the like. A suitable mixing ratio of such monomers is 10 mol% or less, and preferably 5 mol% or less, based on the total number of moles of the vinyl ester monomer.

The method of producing the vinyl ester-based monomer in the present invention is based on suspension polymerization in an aqueous medium, and other polymerization methods cause problems in some way. For example, in the case of solution polymerization, the solvent itself acts as a chain transfer agent, so that the function of halogenated methane as a chain transfer agent is partially inhibited. In bulk polymerization, the viscosity increases as the conversion rate of the monomer increases, resulting in problems such as poor stirring and polymerization inhibition, which are practical problems. Moreover, in both the solution polymerization and the bulk polymerization, the polymerization reaction hardly proceeds, resulting in poor production efficiency.

As the aqueous medium used in the suspension polymerization, water sufficiently purified by ion exchange or the like is preferably used, but industrial water or the like may be used as long as it can be previously confirmed that there is no problem in use.

The aqueous medium may also contain a buffer for adjusting a pH, an antifoaming agent for suppressing foaming, and the like.

In suspension polymerization of the vinyl ester-based monomer, a dispersion stabilizing agent is generally used. The dispersion stabilizing agent that can be used in the suspension polymerization includes, but not particularly limited to, polyvinyl alcohols, methyl celluloses, polyvinyl pyrrolidones and the like, which are general dispersion stabilizing agents for suspension polymerization. From the viewpoint of the structural similarity to the modified vinyl alcohol-based polymer to be produced by the present invention, the polyvinyl alcohols are preferably used and recommended.

A polymerization initiator used for suspension polymerization of the vinyl ester monomer includes, but not particularly limited to, azo compounds such as azobisisobutyronitrile, azobis-2,4-dimethylvaleronitrile, azobis(4-methoxy-2,4-dimethylvaleronitrile), azobisdimethylvaleronitrile and azobismethoxyvaleronitrile; peroxides such as acetyl peroxide, benzoyl peroxide, lauroyl peroxide, acetylcyclohexylsulfonyl peroxide, and 2,4,4-trimethylpentyl-2-peroxyphenoxyacetate; percarbonate compounds such as diisopropyl peroxydicarbonate, di-2-ethylhexyl peroxydicarbonate, and diethoxyethyl peroxydicarbonate; and per-ester compounds such as t-butyl peroxyneodecanate, α-cumyl peroxyneodecanate, and t-butyl peroxyneodecanate, which may be used alone or in combination. Further, a temperature of the polymerization reaction is not particularly limited, but it can usually be set within a range of about 30 to 90 °C.

An amount of the polymerization initiator used may be adjusted as needed. Since the present invention can allow to efficiently perform the polymerization reaction, it contributes to highly efficient production and cost reduction. That is, when the polymerization is carried out by adding the polymerization initiator in the same addition amount under the same conditions, a polymerization velocity can be increased. For example, as shown in Example 1 as described later, when 0.03 parts of azobisisobutyronitrile (AIBN) is added to 100 parts of vinyl acetate and the reaction temperature is about 60 °C, the suspension polymerization reaches a polymerization rate of 90% in a reaction time of 6 hours, whereas the solution/bulk polymerizations (Comparative Examples 1 and 6) result in delayed polymerization.

The polymerization rate of the vinyl ester-based monomer into the vinyl ester-based polymer in suspension polymerization is not particularly limited, but which may preferably be 50% or more in terms of productivity, and more preferably 70% or more, and still more preferably 80% or more. As used herein, the polymerization rate refers to a value measured by a polymer concentration measurement method. In other words, the polymerization rate is calculated by sampling a polymerization solution during polymerization to measure its weight, and calculating a polymer concentration in the polymerization solution based on the weight of the polymer obtained by distilling off the monomer and a solvent to determine an amount of the polymer relative to the monomer.

### (2. Step 2))

The vinyl ester-based polymer obtained by the suspension polymerization according to the present invention is dissolved in an alcoholic medium in the next step. In this case, the vinyl ester-based polymer can be used even in a wet state, but it is preferably used in a dry state in view of easy control of a degree of saponification in a saponification step and reduction of an amount of alkali used.

Examples of the alcoholic medium to be used include methanol, ethanol, butanol, and the like. Among them, methanol is preferably used. A concentration of the polymer in the alcoholic medium is preferably in a range of from 20 to 70% by mass.

### (3. Step 3))

In the present invention, a saponification reaction is carried out by adding an alkali to the alcoholic medium in which the vinyl ester-based polymer is dissolved. The alkali can act as a catalyst.

As the alkali catalyst used in the saponification reaction, alkali catalysts can be used such as hydroxides and alcoholates of alkali metals such as sodium hydroxide, potassium hydroxide, sodium methylate, sodium ethylate and potassium methylate. These alkalis must be used in an amount of from 1 to 100 mmol equivalents relative to the vinyl ester-based monomer. A temperature of the saponification reaction is, but not particularly limited to, usually in a range of from 10 to 70 °C, and preferably in a range of from 30 to 50 °C. The reaction is usually carried out for 1 to 3 hours.

In general saponification reaction of the vinyl ester-based polymer, an acid catalyst may also be used. However, in the present invention, when the acid catalyst is used, the terminal structure does not sufficiently lead to a formyl group. Accordingly, the acid catalyst is not preferable.

A degree of saponification of the modified vinyl alcohol-based polymer is not particularly defined, and can be adjusted to any value more than or equal to 65 mol%, as in the general polyvinyl alcohol.

However, when the vinyl alcohol-based polymer is used as a dispersion stabilizing agent for suspension polymerization of the vinyl-based compound, the degree of saponification is preferably in a range of from 65 to 90 mol%, and more preferably in a range of from 70 to 85 mol%.

The degree of saponification of the modified vinyl alcohol-based polymer is measured in accordance with JIS K 6726: 1994. That is, it can be determined by quantifying a residual acetate group (mol%) in a sample with sodium hydroxide and subtracting it from 100.

In one embodiment, the modified vinyl alcohol-based polymer obtained by the production method according to the present invention can have a formyl terminal (-COH). The content of the formyl terminal in the modified vinyl alcohol-based polymer is preferably 0.01 mol% or more, more preferably 0.02 mol% or more, and still more preferably 0.03 mol% or more, in terms of increasing an unsaturated double bond starting point due to the formyl terminal to obtain a vinyl-based resin having an appropriate particle size. Moreover, from the viewpoint of suppressing coloring of the vinyl-based resin when used as a dispersant, and from the viewpoint of improving stability so as to prevent an increase in viscosity and gelation when forming the aqueous solution, the content is preferably 0.30 mol% or less, and more preferably 0.28 mol% or less, and even more preferably 0.26 mol% or less.

In the present invention, the content of the formyl terminal in the modified vinyl alcohol-based polymer is determined by the following procedure. The modified vinyl alcohol-based polymer is dissolved in heavy water to provide ¹H-NMR spectra (an accumulation number of 7000 times) at 80 °C. From an integrated value of peaks of the formyl groups assigned to 9.2 to 9.8 ppm on the basis of an integrated value of peaks of the methylene groups (1.2 to 2.0 ppm) in the main chain of PVA, the content of each terminal is calculated. Specifically, the content (%) of the formyl terminal is calculated as a / (b / 2) × 100, in which "b" is an integrated value of the methylene group in the main chain of the modified PVA and "a" is an integrated value of the formyl terminal.

In terms of promoting refinement of the produced vinyl-based particles, and of facilitating the porosity of the produced vinyl-based particles to increase, a 0.2% by mass aqueous solution of the modified vinyl alcohol-based polymer according to the present invention has an absorbance of preferably 0.2 or more, and more preferably 0.3 or more, and even more preferably 0.4 or more, at a wavelength of 325 nm, which is proportionate to an amount of double bonds in the modified vinyl alcohol-based polymer. A 0.2% by mass aqueous solution of the modified vinyl alcohol-based polymer according to the present invention has an absorbance at a wavelength of 325 nm of 2.0 or less, and more preferably 1.5 or less, from the viewpoints that the amount of double bonds is increased and the stability of the modified vinyl alcohol-based polymer is decreased.

In the present invention, the absorbance at the wavelength of 325 nm of the 0.2% by mass aqueous solution of the modified vinyl alcohol-based polymer is measured as follows. The modified PVA to be measured is dissolved in water to prepare a 0.2% by mass aqueous solution at 25 °C. The aqueous solution is then placed in a cell (an optical path length of 10 mm), and the absorbance at a wavelength of 325 nm is measured. In Examples, the absorbance was measured using an absorptiometer "UV-1800" from Shimadzu Corporation.

### (4. Stabilizing Agent for Suspension Polymerization)

The modified vinyl alcohol-based polymer according to the present invention can be suitably used as a dispersion stabilizing agent for suspension polymerization. The dispersion stabilizing agent for suspension polymerization may contain PVA other than the modified vinyl alcohol-based polymer according to the present invention, and other various additives. Examples of the additives include pH adjusting agents, crosslinking agents, preservatives, antifungal agents, antiblocking agents, and antifoaming agents. In terms of significantly exerting the effects of the present invention, the dispersion stabilizing agent for suspension polymerization preferably contains 10% by mass or more, and more preferably 30% by mass or more, and even more preferably 70% by mass or more, of the modified vinyl alcohol-based polymer according to the present invention.

The dispersion stabilizing agent for suspension polymerization according to the present invention can be suitably used, in particular for suspension polymerization of a vinyl-based compound. Examples of the vinyl-based compound monomer include vinyl halides such as vinyl chloride; vinyl esters such as vinyl acetate and vinyl propionate; acrylic acid, methacrylic acid, esters and salts thereof; maleic acid, fumaric acid, esters and anhydrides thereof; styrene, acrylonitrile, vinylidene chloride, vinyl ether and the like. Among these, the dispersion stabilizing agent for suspension polymerization according to the present invention is particularly suitably used in suspension polymerization of vinyl chloride alone or in combination with a comonomer(s) that is/are copolymerizable with vinyl chloride. Examples of the comonomer that is copolymerizable with vinyl chloride include vinyl esters such as vinyl acetate and vinyl propionate; (meth)acrylates such as methyl (meth)acrylate and ethyl (meth)acrylate; α-olefins such as ethylene and propylene; unsaturated dicarboxylic acids such as maleic anhydride and itaconic acid; acrylonitrile, styrene, vinylidene chloride, vinyl ether and the like.

The dispersion stabilizing agent for suspension polymerization according to the present invention is suitable for producing soft vinyl chloride in terms of producing vinyl chloride particles having excellent plasticizer absorbability. It also can be used for production of hard vinyl chloride in terms of improved particle size distribution and the like. Furthermore, the ability to produce vinyl chloride particles having excellent plasticizer absorbability means that there are many voids in the resulting vinyl chloride particles. It can be, therefore, expected that the dispersion stabilizing agent according to the present invention has excellent monomer removal properties, and results in less fish eyes in the produced vinyl chloride particles.

The dispersion stabilizing agent for suspension polymerization according to the present invention can be used alone or in combination with other stabilizers such as cellulose derivatives, surfactants and the like.

The use of the dispersion stabilizing agent for suspension polymerization according to the present invention can provide a vinyl chloride resin which has porous resin particles with a uniform particle size distribution even if the suspension polymerization is carried out by a high temperature water charging polymerization method. Hereinafter, the method for polymerizing the vinyl-based compound will be specifically described by way of examples, but the invention is not limited thereto.

For production of resin particles such as vinyl chloride resin particles, the dispersion stabilizing agent for suspension polymerization as described above can be added in an amount of from 0.01% by mass to 0.3% by mass, and preferably from 0.04% by mass to 0.15% by mass, to the vinyl-based compound monomer. Further, a mass ratio of the vinyl compound to water can be vinyl-based compound : water = 1 : 0.9 to 1 : 3, and preferably 1 : 1 to 1 : 1.5.

The polymerization initiator may be one conventionally used for the polymerization of vinyl-based compounds, including percarbonate compounds such as diisopropyl peroxydicarbonate, di-2-ethylhexyl peroxydicarbonate, and diethoxyethyl peroxydicarbonate; perester compounds such as t-butyl peroxyneodecanoate, α-cumyl peroxyneodecanoate and t-butyl peroxyneodecanoate; peroxides such as acetylcyclohexylsulfonyl peroxide and 2,4,4-trimethylpentyl-2-peroxyphenoxyacetate; azo compounds such as azobis-2,4-dimethylvaleronitrile, and azobis(4-methoxy-2,4-dimethylvaleronitrile); and further potassium persulfate, ammonium persulfate, hydrogen peroxide and the like, which may be used alone or in combination.

Furthermore, a polymerization regulator, a chain transfer agent, a gelation improving agent, an antistatic agent, a pH adjusting agent and the like, which are appropriately used for polymerization of the vinyl compound, may be optionally added.

A charging ratio of each component, and a polymerization temperature and the like when carrying out the polymerization of the vinyl-based compound are not particularly limited, and they may be determined in accordance with the conventional conditions in the suspension polymerization of the vinyl-based compound.

The use of the dispersion stabilizing agent for suspension polymerization according to the present invention can provide fine resin particles having a highly uniform particle size, high plasticizer absorbability, and appropriate bulk specific gravity.

The particle size of the resin particles produced by the dispersion stabilizing agent for suspension polymerization according to the present invention can be evaluated from an average particle size which is a particle size (D50) at a cumulative frequency of 50% in the particle size distribution measurement using a sieve in accordance with JIS Z 8815: 1994.

The average particle size is preferably 140 µm or less, and more preferably 130 µm or less, in order to suppress deterioration of processability due to generation of coarse particles and production of non-standard products.

The uniformity of the particle size of the resin particles produced by the dispersion stabilizing agent for suspension polymerization according to the present invention can be evaluated from a difference between a particle size (D80) at a cumulative frequency of 80% and a particle size (D20) at a cumulative frequency of 20% in the particle size distribution measurement using a sieve in accordance with JIS Z 8815: 1994.

The difference between the particle size (D80) at a cumulative frequency of 80% and the particle size (D20) with a cumulative frequency of 20% is preferably 62 µm or less, and preferably 60 µm or less, in order to suppress deterioration of processability due to generation of coarse particles and production of non-standard products.

A plasticizer absorption amount of the resin particles produced by the dispersion stabilizing agent for suspension polymerization according to the present invention is preferably 28 phr or more, and more preferably 30 phr or more, in terms of improvement of processability.

The bulk specific gravity of the resin particles produced by the dispersion stabilizing agent for suspension polymerization according to the present invention is preferably from 0.35 to 0.60, and more preferably from 0.38 to 0.55, in terms of improving productivity during processing.

### EXAMPLES

Hereinafter, the present invention will be described in more detail with reference to Examples. As used herein, "part(s)" and "%" mean "part(s) by mass" and "% by mass", unless otherwise specified.

### (Example 1)

### <Preparation of Modified Vinyl Alcohol-Based Polymer>

100 parts of vinyl acetate, 120 parts of water, 0.087 parts of polyvinyl alcohol (DenkaPoval W-20N) as a dispersing agent, 1.0 part of tribromomethane as a modifying species, 0.03 parts of azobisisobutyronitrile (in the form of powder) were charged into a polymerization vessel, and suspension polymerization was carried out at 60 °C in a nitrogen atmosphere. The polymerization was stopped at the time when the polymerization rate reached 90% (on 6 hours from the start of the reaction), and unreacted vinyl acetate was removed according to the conventional method.

The resulting polymer was dissolved in methanol to obtain a methanol solution having a polymer concentration of 50% in methanol. This was saponified with sodium hydroxide at 40 °C. Sodium hydroxide was used in an amount of 23 mmol equivalents relative to 1 mol of a vinyl acetate unit in the resulting polymer. The saponification reaction was stopped with acetic acid such that a degree of saponification was about 72 mol%, and then a granular modified vinyl alcohol-based polymer was obtained after filtration and drying. Table 1 shows properties of the modified vinyl alcohol-based polymer.

### <Suspension Polymerization of Vinyl Chloride>

To a 30 L stainless steel autoclave equipped with a stirrer were added 12 kg of water at 30 °C, 9.5 g of the resulting modified vinyl alcohol-based polymer and 4.6 g of t-butyl peroxyneodecanoate and 1 g of α-cumyl peroxyneodecanoate as polymerization initiators, with stirring. After degassing the autoclave under vacuum, 5 kg of vinyl chloride monomer was added and polymerization was carried out at 57 °C for 4 hours.

### <Evaluation of Vinyl Chloride Resin>

An average particle size, particle size distribution, plasticizer absorption amount and bulk specific gravity of the resulting vinyl chloride resin were evaluated in the following method. The results are shown in Table 1.

The measurement of the average particle size was carried out according to JIS Z 8815: 1994 using sieves of 60 mesh (mesh opening of 250 µm), 80 mesh (mesh opening of 180 µm), 100 mesh (mesh opening of 150 µm), 150 mesh (mesh opening of 106 µm), and 200 mesh (mesh opening of 75 µm). A particle size (D50) at a cumulative frequency of 50% was determined to be the average particle size, and a difference between a particle size (D80) at a cumulative frequency of 80% and a particle size (D20) at a cumulative frequency of 20% was determined to be the particle size distribution.

The bulk specific gravity was measured in accordance with JIS K 6720-2: 1999.

The plasticizer absorption amount was measured by the following procedure. A glass fiber was filled over a bottom of an aluminum alloy container having an inner diameter of 25 mm and a depth of 85 mm, and 10 g of vinyl chloride resin was charged therein. To the container was added 15 ml of a plasticizer (dioctyl phthalate; hereinafter abbreviated as DOP) and allowed to stand for 30 minutes to permeate the DOP into the vinyl chloride resin sufficiently. Any excess DOP was centrifuged under an acceleration of 1500 G, and a mass of DOP absorbed in 10 g of the vinyl chloride resin was measured and converted into DOP parts by mass (phr) per 100 parts by mass of the vinyl chloride resin.

### (Examples 2 to 6)

A modified vinyl alcohol-based polymer was obtained in the same method as that of Example 1, with the exception that the type of halogenated methane (modifying species) and the amount of it added to 100 parts of vinyl acetate were changed to the conditions as shown in Table 1. Suspension polymerization of vinyl chloride was then carried out under the same conditions as those of Example 1, with the exception that the resulting modified vinyl alcohol-based polymer was used. Table 1 shows properties (a formyl group content, a degree of polymerization, a degree of saponification, UV absorbance) of the modified vinyl alcohol-based polymer and the vinyl chloride resin.

### (Comparative Example 1)

100 parts of vinyl acetate, 1.0 part of tribromomethane as a modifying species, and 0.03 parts of azobisisobutyronitrile (as a 1% methanol solution) were charged into a polymerization vessel, and polymerized at 60 °C in a nitrogen atmosphere. Although the polymerization was carried out for 6 hours, the reaction was stopped because the polymerization rate was less than 10%.

### (Comparative Examples 2 and 3)

A modified vinyl alcohol polymer was obtained in the same method as that of Example 1, with the exception that the modifying species and the amount of it added to 100 parts of vinyl acetate were changed to the conditions as shown in Table 1. Suspension polymerization of vinyl chloride was then carried out under the same conditions as those of Example 1, with the exception that the resulting modified vinyl alcohol-based polymer was used. Table 1 shows properties of the modified vinyl alcohol-based polymer and the vinyl chloride resin.

### (Comparative Example 4)

100 parts of vinyl acetate, 1.2 parts of acetaldehyde as a modifying species, and 0.03 parts of azobisisobutyronitrile (as a 1% methanol solution) were charged into a polymerization vessel, and polymerization was carried out at 60 °C in a nitrogen atmosphere. The polymerization was stopped at the time when the polymerization rate reached 90%, and unreacted vinyl acetate was removed according to the conventional method.

The resulting polymer was dissolved in methanol to obtain a methanol solution having a polymer concentration of 50% in methanol. This was saponified with sodium hydroxide at 40 °C. Sodium hydroxide was used in an amount of 11 mmol equivalents relative to 1 mol of a vinyl acetate unit in the resulting polymer. The saponification reaction was stopped with acetic acid such that a degree of saponification was about 72 mol%, and then a modified vinyl alcohol-based polymer was obtained after filtration and drying. Suspension polymerization of vinyl chloride was carried out under the same conditions as those of Example 1, with the exception that the resulting modified vinyl alcohol-based polymer was used. Table 1 shows properties of the modified vinyl alcohol-based polymer and the vinyl chloride resin.

### (Comparative Example 5)

100 parts of vinyl acetate, 10 parts of methanol, 2.2 parts of acetaldehyde as a modifying species, and 0.03 parts of azobisisobutyronitrile (as a 1% methanol solution) were charged into a polymerization vessel, and polymerization was carried out at 60 °C in a nitrogen atmosphere. The polymerization was stopped at the time when the polymerization rate reached 50%, and unreacted vinyl acetate was removed according to the conventional method.

The resulting polymer was dissolved in methanol to obtain a methanol solution having a polymer concentration of 50% in methanol. This was saponified with sodium hydroxide at 40 °C. Sodium hydroxide was used in an amount of 10 mmol equivalents relative to 1 mol of a vinyl acetate unit in the resulting polymer. The saponification reaction was stopped with acetic acid such that a degree of saponification was about 72 mol%, and then a modified vinyl alcohol-based polymer was obtained after filtration and drying. Suspension polymerization of vinyl chloride was carried out under the same conditions as those of Example 1, with the exception that the resulting modified vinyl alcohol-based polymer was used. Table 1 shows properties of the modified vinyl alcohol-based polymer and the vinyl chloride resin.

### (Comparative Example 6)

100 parts of vinyl acetate, 37 parts of methanol, 0.4 parts of tribromomethane as a modifying species, and 0.03 parts of azobisisobutyronitrile (as a 1% methanol solution) were charged into a polymerization vessel, and polymerized at 60 °C in a nitrogen atmosphere. Although the polymerization was carried out for 8 hours, the reaction was stopped because the polymerization rate was less than 10%.

### <Discussion>

In Comparative Examples 1 and 6, tribromomethane was used as a modifying species, but the polymerization rate did not increase because the polymerization method was inappropriate. In Examples 1 to 6, the resulting vinyl chloride resin particles had a smaller average particle size and a narrower particle size distribution as compared with Comparative Examples 2 to 5. Particularly, in Examples 1 to 3 where tribromomethane was used as the modifying species, the resulting vinyl chloride resin particles had the smallest average particle size and the narrowest particle size distribution.

**[Table 1]**

| | | | Example 1 | Example 2 | Example 3 | Example 4 | Example 5 | Example 6 |
|---|---|---|---|---|---|---|---|---|
| Polymerization Conditions | | | | | | | | |
| | Polymerization Method | | Suspension | Suspension | Suspension | Suspension | Suspension | Suspension |
| | Modifying Species | | HCBr₃ | HCBr₃ | HCBr₃ | H₂CBr₂ | CBr₄ | CCl₄ |
| | Addition Amount | [Part] | 1.0 | 1.2 | 0.8 | 8.3 | 0.8 | 0.5 |

| PVA | | | | | | | | |
|---|---|---|---|---|---|---|---|---|
| | Formyl Group Content | [mol%] | 0.23 | 0.26 | 0.17 | 0.04 | 0.16 | 0.03 |
| | Degree of Polymerization | | 600 | 550 | 750 | 650 | 620 | 620 |
| | Degree of Saponification | [mol%] | 73.4 | 72.5 | 71.8 | 72.5 | 72.6 | 72.4 |
| | UV Absorbance (325nm) | Abs | 1.18 | 1.30 | 0.90 | 0.44 | 0.91 | 0.38 |

| Vinyl Chroide Polymerization Test Results | | | | | | | | |
|---|---|---|---|---|---|---|---|---|
| | Average Particle Size (D50) | [µm] | 119 | 120 | 123 | 132 | 127 | 131 |
| | Distribution (D80-D20) | [µm] | 53 | 55 | 51 | 62 | 57 | 60 |
| | Plasticizer Absorption Amount | [phr] | 31 | 33 | 29 | 30 | 31 | 29 |
| | Bulk Specific Gravity | [g/mL] | 0.40 | 0.38 | 0.42 | 0.41 | 0.40 | 0.41 |
| | | | | | | | | |

| | | | Comparative Example 1 | Comparative Example 2 | Comparative Example 3 | Comparative Example 4 | Comparative Example 5 | Comparative Example 6 |
|---|---|---|---|---|---|---|---|---|
| Polymerization Conditions | | | | | | | | |
| | Polymerization Method | | Bulk | Suspension | Suspension | Bulk | Solution | Solution |
| | Modifying Species | | HCBr₃ | C₂H₂Br₄ | CH₃CHO | CH₃CHO | CH₃CHO | HCBr₃ |
| | Addition Amount | [Part] | 10 | 0.5 | 2.6 | 1.2 | 2.2 | 0.4 |

| PVA | | | | | | | | |
|---|---|---|---|---|---|---|---|---|
| | Formyl Group Content | [mol%] | Stopped because polymerization rate was not increased | 0.02 | 0.00 | 0.00 | 0.00 | Stopped because |
| | Degree of Polymerization | | | 600 | 590 | 630 | 650 | polymerization rate |
| | Degree of Saponification | [mol%] | | 72.6 | 72.1 | 71.9 | 72.4 | was not increased |
| | UV Absorbance (325nm) | Abs | | 0.41 | 0.15 | 0.11 | 0.09 | |

| Vinyl Chroide Polymerization Test Results | | | | | | | | |
|---|---|---|---|---|---|---|---|---|
| | Average Particle Size (D50) | [µm] | - | 180 | 142 | 141 | 167 | - |
| | Distribution (D80-D20) | [µm] | - | 75 | 62 | 65 | 62 | - |
| | Plasticizer Absorption Amount | [phr] | - | 30 | 31 | 30 | 29 | - |
| | Bulk Specific Gravity | [g/mL] | - | 0.40 | 0.40 | 0.42 | 0.45 | - |

## Claims

1. A method of producing a modified vinyl alcohol-based polymer having a formyl group at its terminal, comprising steps of:
1) subjecting a vinyl ester-based monomer to suspension polymerization in an aqueous medium in the presence of one or more halogenated methanes represented by general formulae (I) to (III) to obtain a vinyl ester-based polymer, wherein the vinyl ester-based monomer is polymerized alone or the vinyl ester-based monomer is copolymerized with 10 mol% or less of a monomer that is copolymerizable with the vinyl ester monomer, based on the total number of moles of the vinyl ester-based monomer:
H₂CX₂ ··· (I)
in which two Xs are each independently a halogen atom selected from a group consisting of a chlorine atom, a bromine atom and an iodine atom;
HCX₃ ··· (II)
in which three Xs are each independently a halogen atom selected from a group consisting of a chlorine atom, a bromine atom and an iodine atom; and
CX₄ ··· (III)
in which four Xs are each independently a halogen atom selected from a group consisting of a chlorine atom, a bromine atom and an iodine atom;
2) dissolving the vinyl ester-based polymer obtained in the step 1) in an alcoholic medium; and
3) adding an alkali to a solution of the vinyl ester-based polymer in the alcoholic medium, obtained in the step 2), to cause saponification reaction.

2. The method of producing the modified vinyl alcohol-based polymer according to claim 1, wherein at least one selected from the group consisting of tribromomethane, trichloromethane and iodoform is used as the halogenated methane.

3. The method of producing the modified vinyl alcohol-based polymer according to claim 1 or 2, wherein a degree of saponification in the step 3) is adjusted to 65 mol% to 90 mol%.

4. The method of producing the modified vinyl alcohol-based polymer according to any one of claims 1 to 3, wherein the modified vinyl alcohol polymer has a formyl group content of from 0.01 to 0.30 mol%.

5. The method of producing the modified vinyl alcohol-based polymer according to any one of claims 1 to 4, wherein the modified vinyl alcohol-based polymer has a degree of polymerization of from 300 to 4,000.

6. The method of producing the modified vinyl alcohol-based polymer according to any one of claims 1 to 5, wherein a total amount of halogenated methane added in the step 1) is from 0.1 to 10 parts by mass per 100 parts by mass of the vinyl ester monomer.

## Patentansprüche

1. Verfahren zur Herstellung eines modifizierten vinylalkoholbasierten Polymers mit einer Formylgruppe an seinem Ende, umfassend die Schritte:
1) Unterziehen eines vinylesterbasierten Monomers Suspensionspolymerisation in einem wässrigen Medium in Gegenwart von einem oder mehreren halogenierten Methanen, die durch die allgemeinen Formeln (I) bis (III) wiedergegeben werden, um ein vinylesterbasiertes Polymer zu erhalten, wobei das vinylesterbasierte Monomer allein polymerisiert wird oder das vinylesterbasierte Monomer mit 10 Mol.% oder weniger von einem Monomer copolymerisiert wird, das mit dem Vinylestermonomer copolymerisierbar ist, bezogen auf die Gesamtanzahl der Mole des vinylesterbasierten Monomers:
H₂CX₂ ··· (I)
wobei zwei X jeweils unabhängig ein Halogenatom ausgewählt aus einer Gruppe bestehend aus einem Chloratom, einem Bromatom und einem Iodatom sind;
HCX₃ ··· (II)
wobei drei X jeweils unabhängig ein Halogenatom ausgewählt aus einer Gruppe bestehend aus einem Chloratom, einem Bromatom und einem Iodatom sind; und
CX₄ ··· (III)
wobei vier X jeweils unabhängig ein Halogenatom ausgewählt aus einer Gruppe bestehend aus einem Chloratom, einem Bromatom und einem Iodatom sind;
2) Lösen des in Schritt 1) erhaltenen vinylesterbasierten Polymers in einem alkoholischen Medium, und
3) Zugeben eines Alkalis zu einer in Schritt 2) erhaltenen Lösung des vinylesterbasierten Polymers in dem alkoholischen Medium, um eine Verseifungsreaktion zu bewirken.

2. Verfahren zur Herstellung des modifizierten vinylalkoholbasierten Polymers nach Anspruch 1, wobei als halogeniertes Methan mindestens eines ausgewählt aus der Gruppe bestehend aus Tribrommethan, Trichlormethan und Iodoform verwendet wird.

3. Verfahren zur Herstellung des modifizierten vinylalkoholbasierten Polymers nach Anspruch 1 oder 2, wobei ein Verseifungsgrad in dem Schritt 3) auf 65 Mol.% bis 90 Mol.% eingestellt wird.

4. Verfahren zur Herstellung des modifizierten vinylalkoholbasierten Polymers nach einem der Ansprüche 1 bis 3, wobei das modifizierte Vinylalkoholpolymer einen Formylgruppengehalt von 0,01 bis 0,30 Mol.% hat.

5. Verfahren zur Herstellung des modifizierten vinylalkoholbasierten Polymers nach einem der Ansprüche 1 bis 4, wobei das modifizierte vinylalkoholbasierte Polymer einen Polymerisationsgrad von 300 bis 4000 hat.

6. Verfahren zur Herstellung des modifizierten vinylalkoholbasierten Polymers nach einem der Ansprüche 1 bis 5, wobei die Gesamtmenge des in Schritt 1 zugegebenen halogenierten Methans 0,1 bis 10 Massenteile auf 100 Massenteile des Vinylestermonomers beträgt.

## Revendications

1. Procédé de production d'un polymère modifié à base d'alcool vinylique avec un groupe formyle à son extrémité, comprenant les étapes suivantes :
1) soumettre un monomère à base d'ester vinylique à la polymérisation en suspension dans un milieu aqueux en présence d'un ou de plusieurs méthanes halogénés représentés par les formules générales (1) à (III) pour obtenir un polymère à base d'ester vinylique, dans lequel le monomère à base d'ester vinylique est polymérisé seul ou le monomère à base d'ester vinylique est copolymérisé avec 10 % en mole ou moins d'un monomère qui est copolymérisable avec le monomère d'ester vinylique, selon le nombre total de moles du monomère à base d'ester vinylique :
H₂CX₂ ··· (I)
dans lequel les deux X sont chacun indépendamment un atome d'halogène choisi dans un groupe constitué d'un atome de chlore, d'un atome de brome et d'un atome d'iode ;
HCX₃ ··· (II)
dans lequel les trois X sont chacun indépendamment un atome d'halogène choisi dans un groupe constitué d'un atome de chlore, d'un atome de brome et d'un atome d'iode ; et
CX₄ ··· (III)
dans lequel les quatre X sont chacun indépendamment un atome d'halogène choisi dans un groupe constitué d'un atome de chlore, d'un atome de brome et d'un atome d'iode ;
2) dissoudre le polymère à base d'ester vinylique obtenu à l'étape 1) dans un milieu alcoolique ; et
3) ajouter un alcali à une solution de polymère à base d'ester vinylique dans le milieu alcoolique, obtenu à l'étape 2), pour provoquer une réaction de saponification.

2. Procédé de production du polymère modifié à base d'alcool vinylique selon la revendication 1, dans lequel au moins un produit sélectionné dans le groupe constitué du tribromométhane, du trichlorométhane et de l'iodoforme est utilisé comme méthane halogéné.

3. Procédé de production du polymère modifié à base d'alcool vinylique selon la revendication 1 ou 2, dans lequel un degré de saponification dans l'étape 3) est ajusté à 65 % en mole à 90 % en mole.

4. Procédé de production du polymère modifié à base d'alcool vinylique selon l'une quelconque des revendications 1 à 3, dans lequel le polymère modifié d'alcool vinylique a une teneur en groupe formyle de 0,01 à 0,30 % en mole.

5. Procédé de production du polymère modifié à base d'alcool vinylique selon l'une quelconque des revendications 1 à 4, dans lequel le polymère modifié à base d'alcool vinylique a un degré de polymérisation de 300 à 4 000.

6. Procédé de production du polymère modifié à base d'alcool vinylique selon l'une quelconque des revendications 1 à 5, dans lequel une quantité totale de méthane halogéné ajoutée à l'étape 1) est de 0,1 à 10 parties en masse pour 100 parties en masse du monomère d'ester vinylique.
